# EUROPÄISCHE PATENTSCHRIFT

(11) **EP 0 976 022 B1**
(45) Veröffentlichungstag und Bekanntmachung des Hinweises auf die Patenterteilung: **22.08.2001**
(21) Anmeldenummer: 96946225.8
(22) Anmeldetag: 20.12.1996
(51) Int. Cl.: G06F 3/023

(54) **ÜBER EIN SEQUENTIELL ZU DURCHLAUFENDES MENU STEUERBARE VORRICHTUNG UND VERFAHREN ZUR SEQUENTIELLEN MENUSTEUERUNG**
DEVICE CONTROLLABLE VIA A MENU TO BE SEQUENTIALLY EXECUTED AND PROCESS FOR SEQUENTIAL MENU CONTROL
DISPOSITIF POUVANT ETRE COMMANDE PAR L'INTERMEDIAIRE D'UN MENU A PARCOURIR SEQUENTIELLEMENT ET PROCEDE DE COMMANDE SEQUENTIELLE PAR MENU

(30) Priorität: 09.01.1996 DE 19600555
(43) Veröffentlichungstag der Anmeldung: 02.02.2000
(73) Patentinhaber: SIEMENS AKTIENGESELLSCHAFT, 80333 München (DE)
(72) Erfinder: SCHELFHOUT, Bettina, B-1742 Ternat (BE)
(86) Internationale Anmeldenummer: DE9602493
(87) Internationale Veröffentlichungsnummer: WO9725667

(56) Entgegenhaltungen:
- EP-A- 0 637 794
- FR-A- 2 632 097
- US-A- 5 463 727
- US-A- 5 485 175
- SOFTWARE PRACTICE & EXPERIENCE, Bd. 16, Nr. 3, März 1986, CHICHESTER GB, Seiten 217-224, XP002032462 RICHARD R. RAGAN: "CONTEXT: An On-line Documentation System"

## Beschreibung

Zahlreiche Geräte wie z.B. Telefone, Telefaxgeräte oder andere Kommunikationsendgeräte aber auch verschiedene Geräte außerhalb der Kommunikationstechnik werden heute über sequentiell zu durchlaufende Menüs gesteuert. Diese Geräte verfügen meist über eine Anzeigeeinrichtung zur Anzeige von Menüauswahlobjekten (menu items), eine Einrichtung zur Auswahl (selection) eines angezeigten Menüauswahlobjektes und eine Einrichtung zum Bewirken eines Übergangs (scrollen) zu einem nachfolgenden Menüauswahlobjekt. Menüauswahlobjekte werden gelegentlich auch als Menüpunkte bezeichnet. Sie können durch alphanumerische oder ikonographische Symbole angezeigt werden; für die vorliegende Erfindung ist das nicht von Bedeutung.

Es ist für solche Geräte typisch, daß die Anzeigeeinrichtung jeweils ein einzelnes Menüauswahlobjekt anzeigt, und daß der Benutzer z.B. mit Hilfe einer Taste oder mehrerer Tasten ein angezeigtes Menüauswahlobjekt auswählt und dadurch eine entsprechende Funktion des Gerätes aktiviert oder zu einem nachfolgenden Menüauswahlobjekt übergeht, und so weiter. Bei komplexeren Geräten dieser Art sind die Menüs hierarchisch gegliedert in Form einer baumartigen Struktur aus Menülisten auf jeder Ebene der Hierarchie. Jede Menüliste besteht aus Menüauswahlobjekten, die ihrerseits Menülisten sein können.

Menüsteuerungen dieser Art haben den Vorteil, daß sie auch einem Benutzer, der mit dem Gerät nicht oder nicht ausreichend vertraut ist, eine Führung anbieten, die im Prinzip jedem Anwender die Benutzung des Gerätes auch ohne Vorkenntnisse ermöglicht. Hierzu sucht der Anwender einfach sequentiell nach einem in seiner speziellen Situation passenden Menüauswahlobjekt und wählt dieses dann aus. Bei komplexeren hierarchischen Menüsteuerungen kann diese Suche aber schnell sehr unkomfortabel werden, wenn ein mit dem Gerät wenig erfahrener Benutzer viele Menüs und Untermenüs durchsuchen muß, oder er aus Unachtsamkeit irrtümlich einen auszuwählenden Menüpunkt übersprungen hat, anstatt diesen - wie eigentlich beabsichtigt - auszuwählen, weil bei bekannten Geräten mit derartigen Menüsteuerungen ein Wechsel zu einer anderen Menüliste nur über einen erneuten Durchlauf der gesamten darüberliegenden Menühierarchie möglich ist. Der Benutzer muß also "jedesmal von vorn beginnen", d.h. er muß nach dem Durchsuchen einer Menüliste - z.B. durch Auswahl eines entsprechenden Menüauswahlobjektes, oder durch Bedienung einer speziell hierfür vorgesehenen Taste - an den Anfang (das erste Menüauswahlobjekt auf der obersten Hierarchieebene) zurückspringen und sich von hier aus wieder durch die Baumstruktur zu einer anderen Menüliste durcharbeiten.

Der Erfindung liegt die Aufgabe zugrunde, diese Situation zu verbessern, also eine Menüsteuerung anzugeben, mit der die Suche in hierarchischen Menülisten auf komfortable Weise möglich ist, ohne wesentliche Teile der baumartigen Menüstruktur erneut durchlaufen zu müssen, um von einer Menüliste in einer andere Menüliste zu wechseln. Diese Aufgabe wird durch eine über ein sequentiell zu durchlaufendes Menü steuerbare Vorrichtung mit Merkmalen nach Anspruch 1 gelöst. Bei Benutzung der erfindungsgemäßen Vorrichtung hat der Anwender die vorteilhafte Möglichkeit, nach dem Durchsuchen einer Menüliste durch Auswahl eines entsprechenden erfindungsgemäßen Menüauswahlobjektes direkt in die nachfolgende Menüliste springen zu können, ohne in das oberste Menü und von hier aus durch die Baumstruktur in diese Menüliste gehen zu müssen. Die Navigation in sequentiell zu durchlaufenden, hierarchischen Menüsteuerungen für Kommunikationsendgeräte und andere menügesteuerte Vorrichtungen wird also durch ein Menüauswahlobjekt erleichtert, das einen direkten Sprung zum nachfolgenden Menüauswahlobjekt der nächsthöheren Ebene bewirkt.

Vorteilhafte Weiterbildungen der Erfindung sind Gegenstand weiterer Patentansprüche.

Figur 1 zeigt in schematischer Weise ein einfaches Beispielmenü aus drei Menülisten mit je drei Menüauswahlobjekten gemäß dem Stand der Technik.

Figur 2 zeigt mögliche Wege durch dieses in Figur 1 dargestellte Menü.

Figur 3 zeigt in schematischer Weise ein gemäß der vorliegenden Erfindung um ein Menüauswahlobjekt zum direkten Sprung in eine nachfolgende Menüliste erweitertes Menü.

Figur 4 zeigt mögliche Wege durch dieses in Figur 3 dargestellte Menü entsprechend der vorliegenden Erfindung.

Figur 5 zeigt die hierarchische Baumstruktur des Beispielmenüs gemäß Figur 3.

Figur 6 zeigt in schematischer Weise einen Datensatz einer Datenstruktur gemäß einem bevorzugen Ausführungsbeispiel der vorliegenden Erfindung.

Figur 7 zeigt in schematischer Weise eine Datenstruktur gemäß einem bevorzugen Ausführungsbeispiel der vorliegenden Erfindung.

Am Ende der Beschreibung ist ein Computerprogramm zur Ausführung einer bevorzugten Ausführungsform der vorliegenden Erfindung wiedergegeben.

Im folgenden wird die Erfindung anhand der Figuren und mit Hilfe bevorzugter Ausführungsbeispiele näher beschrieben.

Im folgenden wird eine verbesserte Menüsteuerung für Geräte mit sequentieller Menüsteuerung beschrieben, die die Navigation in hierarchisch gegliederten Menüstrukturen erleichtert. Hat ein Anwender bei einer herkömmlichen Menüsteuerung eine bestimmte Menüliste ausgewählt, kann er nicht direkt zur nächsten Menüliste übergehen (scrollen). Hat ein Anwender eines solchen Gerätes also einen Fehler gemacht oder weiß er nicht, in welcher Menüliste das von ihm gewünschte Menüauswahlobjekt (menu item) sich befindet, ist er gezwungen, alle Menülisten nacheinander zu durchsuchen und dabei jedesmal von vorne, d.h. auf der obersten Ebene der Menühierarchie zu beginnen.

Mit der vorliegenden Erfindung wird der Anwender in die Lage versetzt, eine hierarchische Menüstruktur sequentiell zu durchlaufen und dabei alle Menülisten direkt hintereinander zu durchsuchen. Dies ist immer dann vorteilhaft, wenn eine Menüstruktur aus ineinander verschachtelten Menülisten besteht, die z.B. wegen der beschränkten Möglichkeiten der Anzeigeeinrichtungen eines Gerätes nur sequentiell durchlaufen werden können. Dies ist z.B. bei menügesteuerten Kommunikationsendgeräten wie z.B. menügesteuerten Telefonen oder Telefaxgeräten der Fall.

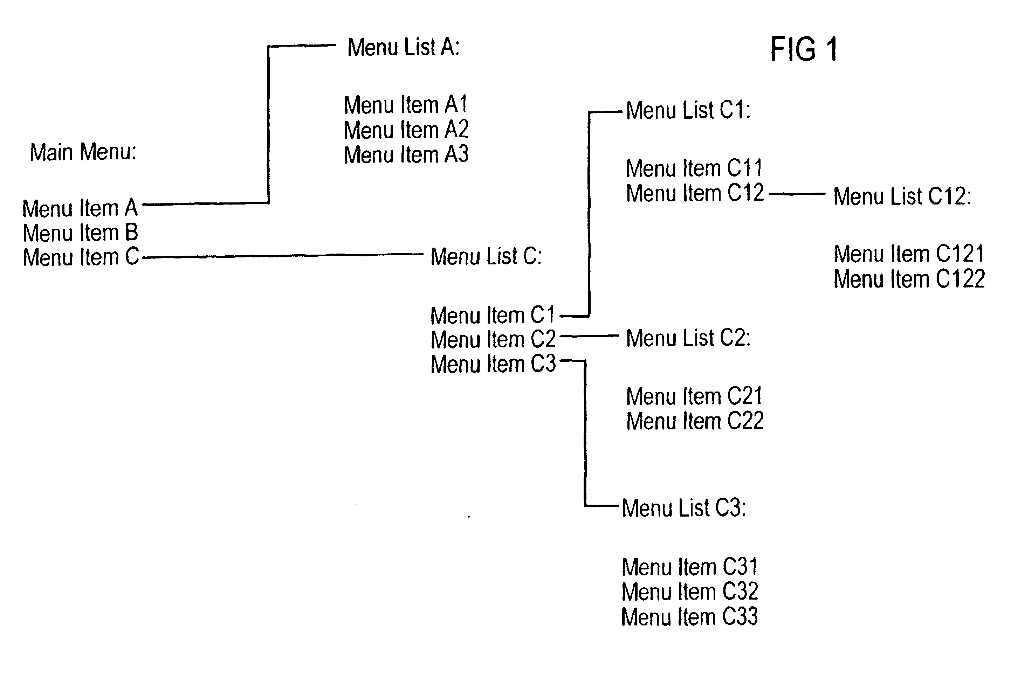

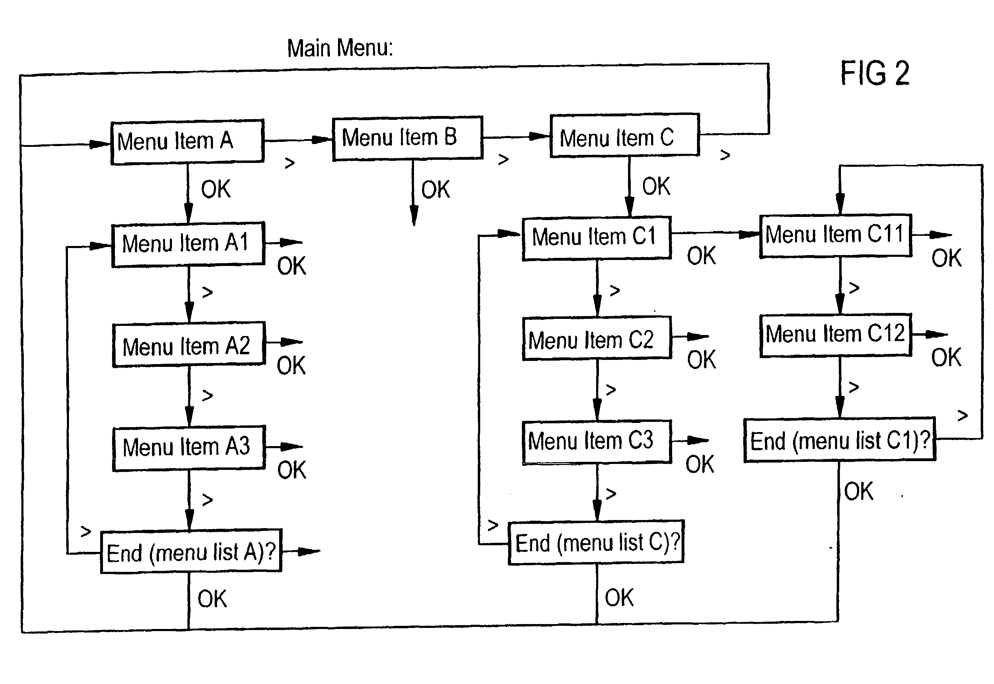

Eine hierarchisch gegliederte Menüstruktur besteht aus Menülisten mit Menüauswahlobjekten, welche ihrerseits wieder Menülisten sein können. Hierdurch entsteht eine baumartige Struktur aus ineinander verschachtelten Menülisten. Figur 1 zeigt in schematischer Weise ein Beispiel eines derartigen Menüs aus drei Menülisten nach herkömmlicher Art. Will ein Anwender diese Menüstruktur nach einem für seine Zwecke geeigneten Menüauswahlobjekt durchsuchen und so z.B. zu dem Menüauswahlobjekt C3 gelangen, muß er alle drei Listen (A, B, C) nacheinander durchlaufen und dazu nach jedem Durchlaufen einer Liste zurück zur obersten Hierarchieebene, von dort zur nächsten, noch nicht durchlaufenen Liste, dann bis zu deren Ende, wieder zurück, und so weiter. Figur 2 zeigt mögliche Wege durch dieses in Figur 1 dargestellte Menü. Das Symbol ">" steht dabei für den Übergang zum nächsten Menüauswahlobjekt, das Symbol "OK" bezeichnet die Auswahl eines Menüauswahlobjekts. Es ist offensichtlich, daß diese Art der Suche in komplexeren hierarchisch gegliederten Menüstrukturen schnell recht umständlich wird.

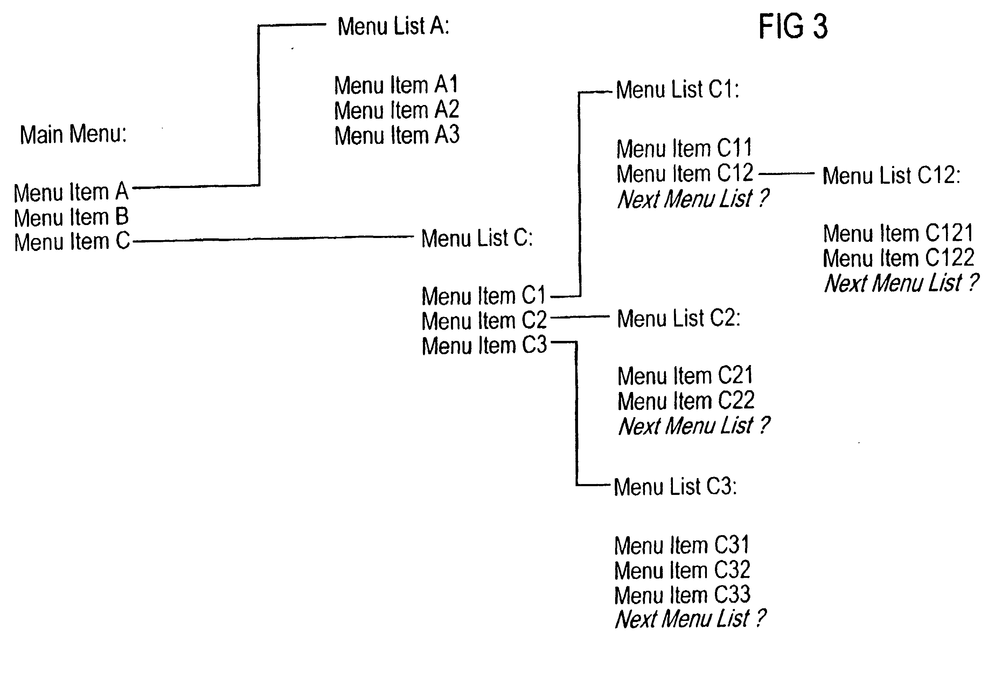

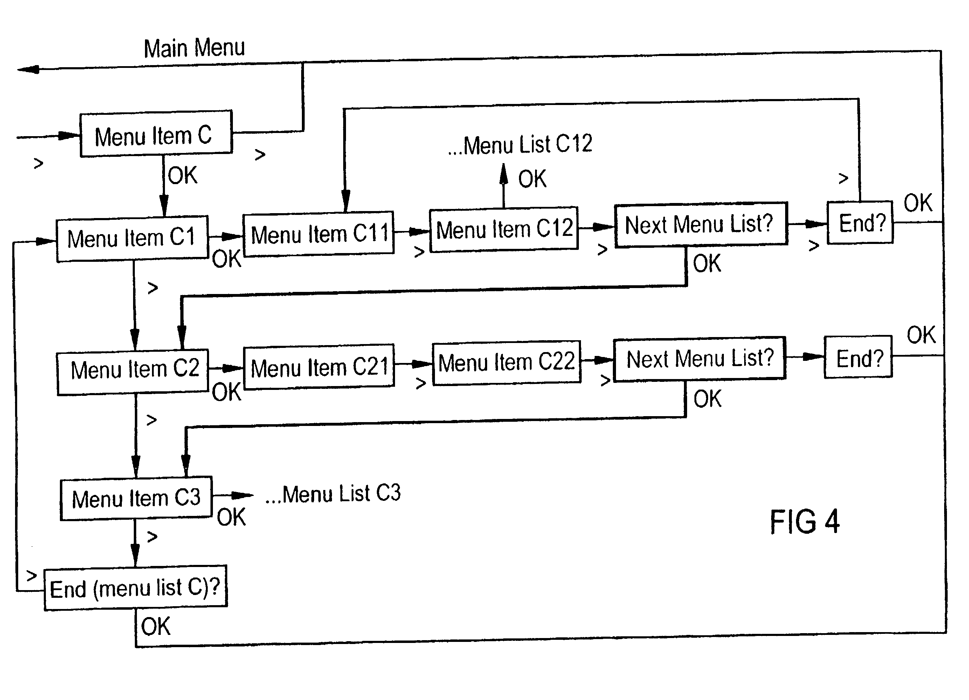

Nach der vorliegenden Erfindung wird nun jede Menüliste um ein neuartiges Menüauswahlobjekt ("next menu list") erweitert, dessen Auswahl (selection) einen direkten Übergang (scrollen), also einen direkten Sprung in die nachfolgende Menüliste bewirkt. Figur 3 zeigt in schematischer Weise ein gemäß der vorliegenden Erfindung um ein Menüauswahlobjekt zum direkten Sprung in eine nachfolgende Menüliste erweitertes Menü. Figur 4 zeigt mögliche Wege durch dieses in Figur 3 dargestellte Menü entsprechend der vorliegenden Erfindung.

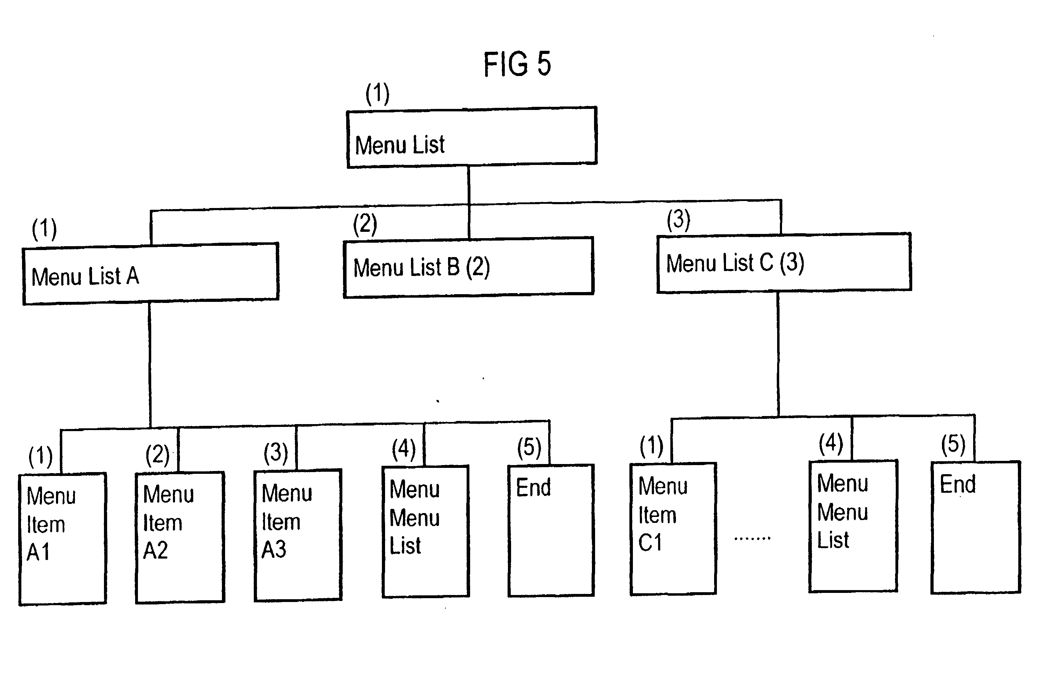

Figur 5 zeigt die hierarchische Baumstruktur des Beispielmenüs gemäß Figur 3. Es ist also bei der erfindungsgemäßen Menüstruktur nicht mehr nötig, den Übergang von einer Menüliste zur nächsten auf dem Umweg über die oberste Hierarchieebene der Menüstruktur durchzuführen. Diese vorteilhafte Wirkung der Erfindung ist aus der Figur 4 direkt ersichtlich.

Will ein Anwender z.B. aus der Menüliste B in die Menüliste C, wählt er hierzu einfach das Menüauswahlobjekt "next menu list" der Menüliste B aus und gelangt so direkt an den Anfang (das erste Menüauswahlobjekt) der Menüliste C. In der herkömmlichen Menüstruktur gemäß Figur 1 hätte er dazu durch die Auswahl des Menüauswahlobjekts "End" der Menüliste B zunächst an den Anfang der gesamten Menüstruktur - in diesem Fall also zum Menüauswahlobjekt "Menu List A" - zurückgehen, von dort über das Menüauswahlobjekt "Menu List B" zum Menüauswahlobjekt "Menu List C" übergehen müssen und schließlich durch Auswahl dieses Menüauswahlobjekts "Menu List C" in die Menüliste C gehen können.

Zur Darstellung der gesamten erfindungsgemäßen Menüstruktur kann man sich einer dem Fachmann geläufigen Baumstruktur bedienen, wie dies in Figur 5 am Beispiel der in Figur 3 gezeigten Menüstruktur der Fall ist. Hierbei ist der Anfangspunkt (auch Hauptmenü genannt) die Wurzel oder der Stamm des Baumes und die einzelnen (primitiven) Menüauswahlobjekte, die nicht ihrerseits Menülisten repräsentieren, sind die Blätter de Baumes. Jeder Ast des Baumes kann mehrere Hierarchieebenen umfassen und jedem Knoten eines Astes kann eine Identifikationsnummer zugeordnet werden, welche diesen Knoten innerhalb einer Hierarchieebene eindeutig identifiziert. Im Beispiel der Figur 5 gibt es drei Ebenen:
- die erste Ebene, die Wurzel (root) des Baumes, die nur aus einer Menüliste, dem Hauptmenü (main menu) besteht;
- die zweite Ebene, die aus 3 Menüpunkten besteht, die in diesem Fall sämtlich ihrerseits Menülisten sind, nämlich die Menülisten A, B und C;
- die dritte Ebene, die in diesem Fall 15 primitive Menüauswahlobjekte, die Blätter des Baumes, umfaßt.

Im allgemeinen können natürlich Menülisten und primitive Menüpunkte nebeneinander auf einer Ebene auftreten. Die Blätter des Baumes sind natürlich stets primitive Menüpunkte.

Beim Durchblättern (scrollen) einer derartigen Menüstruktur wird der laufende Weg (current path) ständig verfolgt (tracking). Jedesmal wenn das Menüauswahlobjekt "next menu list" aktiviert (d.h. ausgewählt) wird, wird das nächste Menüauswahlobjekt der nächsthöheren Ebene, also die nachfolgende Menüliste, falls dieses Menüauswahlobjekt eine Menüliste ist, angezeigt. Der Fachmann erkennt nun sofort, daß man anstelle des nachfolgenden auch das vorhergehende Menüauswahlobjekt der nächsthöheren Ebene als Sprungziel vorsehen kann. Beide Maßnahmen können auch in einem einzigen Ausführungsbeispiel der vorliegenden Erfindung nebeneinander verwirklicht werden, z.B. mit Hilfe zweier Tasten ">" und "<".

Wählt der Anwender z.B. das Menüauswahlobjekt "next menu list" mit der Nummer 1-1-4 (Figur 5), findet ein Sprung zum Menüauswahlobjekt 1-2 (1-(1+1)) statt, in diesem Fall also zur Menüliste "Menu List B". Gibt es keinen nachfolgenden Menüpunkt auf dieser (nächsthöheren) Ebene, wird die darüberliegenden Ebene angesprungen. Ist man also z.B. in der Menüliste C und wählt den Menüpunkt 1-3-4 "next menu list", gibt es auf der zweiten Ebene keinen nächsten Menüpunkt. Dann wird die gleiche Vorgehensweise auf der darüberliegenden Ebene angewendet, gegebenenfalls bis der letzte Menüpunkte auf der obersten Ebene erreicht ist. Ist dies der Fall, wird das Menü zyklisch erweitert (wrapping around), d.h. das erste Menüauswahlobjekt wird angezeigt, im gewählten Beispiel der Menüpunkt 1-1 ("Menu List A").

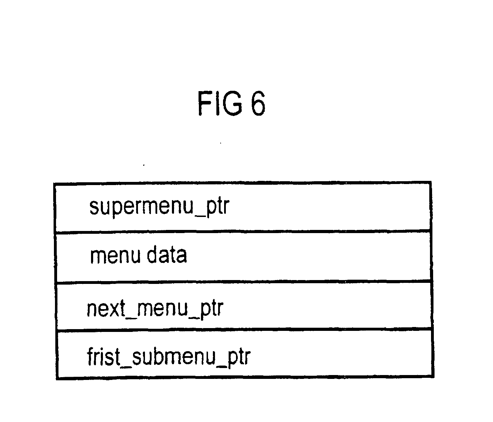

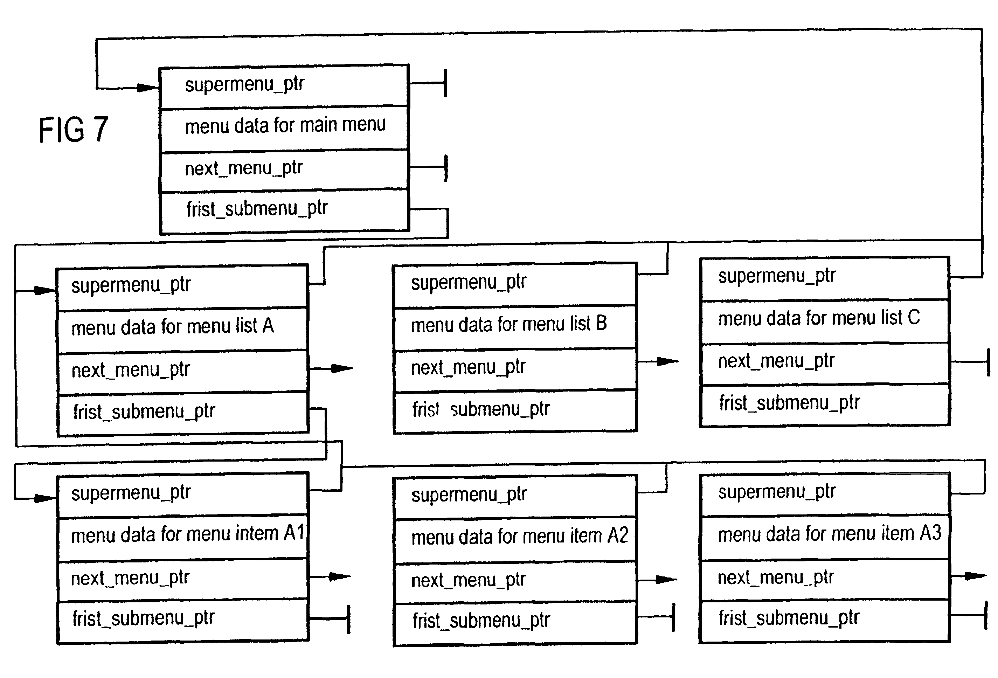

Zur Implementierung der vorliegenden Erfindung in Geräten mit üblichen Einrichtungen zur Speicherung und Verarbeitung von Daten wird die Menüstruktur vorzugsweise mit Hilfe einer Datenstruktur repräsentiert, mit der die Menüpunkte leicht in jeder Richtung adressierbar sind. Dies erlaubt einen raschen Wechsel der Menüpunkte und eine einfache Verfolgung des beschrittenen Weges durch die Menüstruktur. Die Baumstruktur der Figur 5 kann vorteilhaft mit der in Figur 6 gezeigten Datensatzstruktur und einer darauf basierenden baumartigen Datenstruktur gemäß Figur 7 implementiert werden. Dabei wird jedem Menüauswahlobjekt einer Menüliste ein Datensatz zugeordnet, welcher die Menüauswahlobjektdaten, einen Zeiger auf den Datensatz der hierarchisch nächsthöheren Menüliste, einen Zeiger auf den Datensatz des nachfolgenden Menüauswahlobjektes und - falls dieses Menüauswahlobjekt seinerseits eine Menüliste ist - einen Zeiger auf den Datensatz des ersten Menüauswahlobjektes der laufenden Menüliste umfaßt. Zeiger auf nicht vorhandene Objekte werden dabei zweckmäßig mit dem Null-Zeiger (null pointer) belegt.

Die Erfindung kann auch mit Hilfe des nachstehenden Computer-programms "Next Menu List" ausgeführt werden:

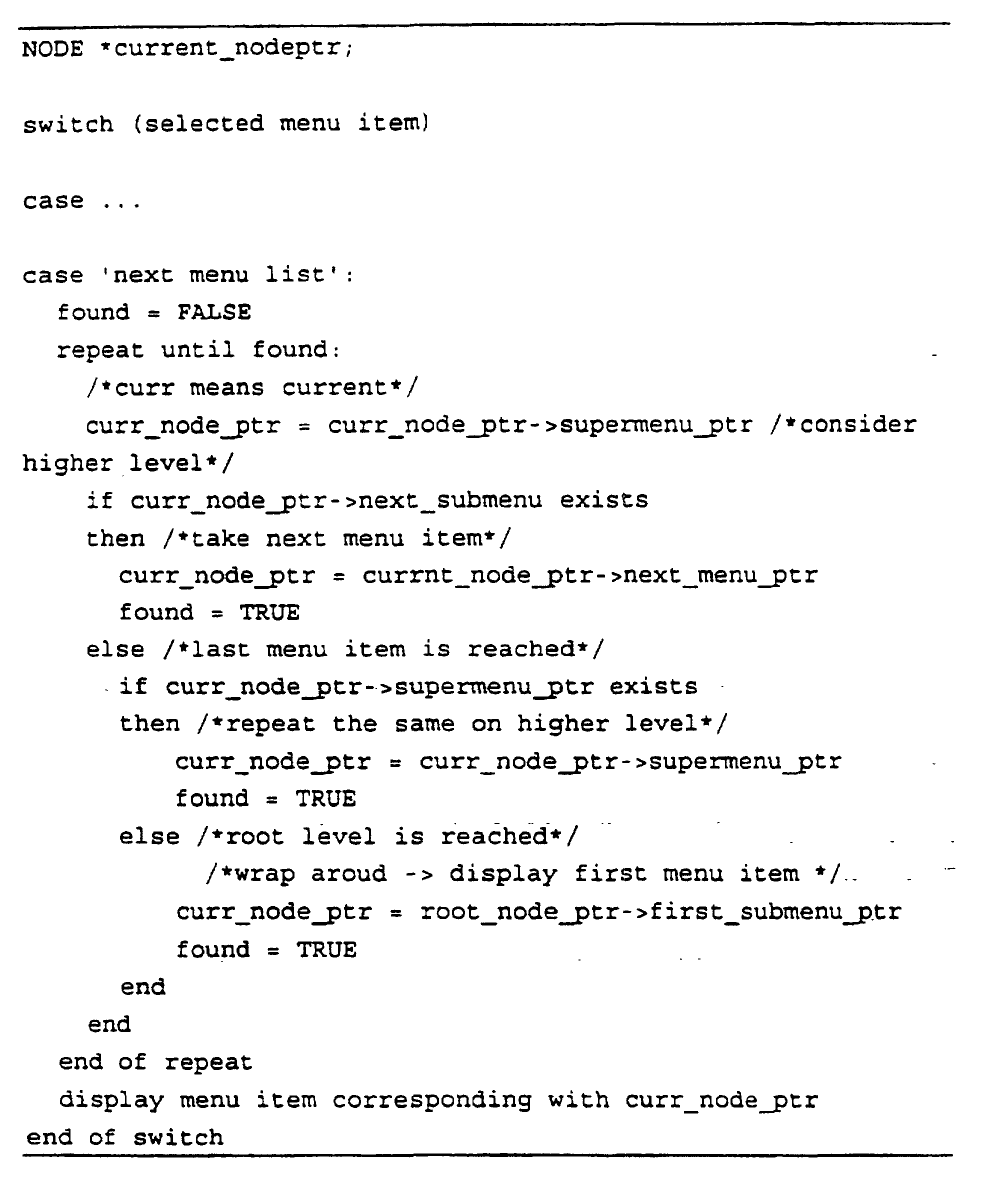

## Patentansprüche

1. Über ein sequentiell zu durchlaufendes Menü steuerbare Vorrichtung mit einer Anzeigeeinrichtung für Menüauswahlobjekte, einer Einrichtung zur Auswahl eines angezeigten Menüauswahlobjektes, einer Einrichtung zum Bewirken eines Übergangs zu einem nachfolgenden Menüauswahlobjekt und mit einem baumartig strukturierten Menü aus hierarchisch gegliederten Menülisten mit Menüauswahlobjekten, die ihrerseits wieder Menülisten sein können, dadurch gekennzeichnet, daß wenigstens eine Menüliste ein Menüauswahlobjekt umfaßt, dessen Auswahl einen direkten Sprung zum nachfolgenden Menüauswahlobjekt der nächsthöheren Ebene bewirkt.

2. Vorrichtung nach Anspruch 1, bei der wenigstens eine Menüliste ein Menüauswahlobjekt (End) umfaßt, dessen Auswahl einen Sprung zum ersten Menüauswahlobjekt der hierarchisch höchsten Ebene (main menu) bewirkt.

3. Vorrichtung nach einem der vorhergehenden Ansprüche, bei der wenigstens eine Menüliste ein Menüauswahlobjekt umfaßt, dessen Auswahl einen direkten Sprung zum vorhergehenden Menüauswahlobjekt der nächsthöheren Ebene bewirkt.

4. Vorrichtung nach einem der vorhergehenden Ansprüche mit einem Datenspeicher, in dem eine Datenstruktur gespeichert wird, bei der jedem Menüauswahlobjekt einer Menüliste ein Datensatz zugeordnet ist, welcher die Menüauswahlobjektdaten, einen Zeiger auf den Datensatz der hierarchisch nächsthöheren Menüliste, einen Zeiger auf den Datensatz des nachfolgenden Menüauswahlobjektes und - falls dieses Menüauswahlobjekt seinerseits eine Menüliste ist - einen Zeiger auf den Datensatz des ersten Menüauswahlobjektes der laufenden Menüliste umfaßt.

5. Verfahren zur sequentiellen Menüsteuerung, bei dem in wenigstens einer Menüliste einer hierarchischen Menüstruktur ein Menüauswahlobjekt vorgesehen ist, dessen Auswahl einen direkten Sprung zum nachfolgenden oder vorhergehenden Menüauswahlobjekt der nächsthöheren Ebene bewirkt.

6. Verfahren nach Anspruch 5, bei dem in einem Datenspeicher eine Datenstruktur aufgebaut wird, in der jedem Menüauswahlobjekt einer Menüliste ein Datensatz zugeordnet ist, welcher die Menüauswahlobjektdaten, einen Zeiger auf den Datensatz der hierarchisch nächsthöheren Menüliste, einen Zeiger auf den Datensatz des nachfolgenden Menüauswahlobjektes und - falls dieses Menüauswahlobjekt seinerseits eine Menüliste ist - einen Zeiger auf den Datensatz des ersten Menüauswahlobjektes der laufenden Menüliste umfaßt.

## Claims

1. Device which can be controlled via a sequentially executed menu having a display device for menu items, a device for selecting a displayed menu item, a device for effecting a changeover to a following menu item and having a menu which has a tree-like structure and is composed of hierarchically organized menu lists with menu items which may themselves in turn be menu lists, characterized in that at least one menu list comprises a menu item whose selection effects a direct jump to the next menu item of the next highest level.

2. Device according to Claim 1, in which at least one menu list comprises a menu item (End) whose selection effects a jump to the first menu item of the hierarchically highest level (main menu).

3. Device according to one of the preceding claims, in which at least one menu list comprises a menu item whose selection effects a direct jump to the preceding menu item of the next highest level.

4. Device according to one of the preceding claims, having a data memory in which a data structure in stored, in which each menu item of a menu list is assigned a data record which comprises the menu item data, a pointer to the data record of the hierarchically next highest menu list, a pointer to the data record of the next menu item and, if this menu item is itself a menu list, a pointer to the data record of the first menu item of the current menu list.

5. Process for sequential menu control, in which in at least one menu list of a hierarchical menu structure a menu item is provided whose selection effects a direct jump to the next or preceding menu item of the next highest level.

6. Method according to Claim 5, in which a data structure in which each menu item of a menu list is assigned a data record is built up in a data memory, which data record comprises the menu item data, a pointer to the data record of the hierarchically next highest menu list, a pointer to the data record of the next menu item and, if this menu item is itself a menu list, a pointer to the data record of the first menu item of the current menu list.

## Revendications

1. Dispositif pouvant être commandé par l'intermédiaire d'un menu à parcourir de manière séquentielle, comportant un dispositif d'affichage pour des objets à sélectionner dans le menu, un dispositif pour sélectionner un objet affiché à sélectionner dans le menu, un dispositif pour provoquer un passage à un objet suivant à sélectionner dans le menu et comportant un menu structuré de manière arborescente constitué de listes de menu organisées de manière hiérarchique et ayant des objets à sélectionner dans le menu qui peuvent être pour leur part à nouveau des listes de menu, caractérisé en ce que au moins une liste de menu comporte un objet à sélectionner dans le menu, dont la sélection provoque un saut direct à l'objet suivant à sélectionner dans le menu du niveau juste supérieur.

2. Dispositif suivant la revendication 1, dans lequel au moins une liste de menu comporte un objet (End) à sélectionner dans le menu, dont la sélection provoque un saut au premier objet à sélectionner dans le menu du niveau (main menu) hiérarchiquement le plus élevé.

3. Dispositif suivant l'une des revendications précédentes, dans lequel au moins une liste de menu comporte un objet à sélectionner dans le menu, dont la sélection provoque un saut direct à l'objet précédent à sélectionner dans le menu du niveau juste supérieur.

4. Dispositif suivant l'une des revendications précédentes, qui comporte une mémoire de données dans laquelle est enregistrée une structure de données, dans laquelle il est associé à chaque objet à sélectionner dans le menu d'une liste de menu un ensemble de données qui comporte les données des objets à sélectionner dans le menu, un pointeur sur l'ensemble de données de la liste de menu hiérarchiquement juste supérieure, un pointeur sur l'ensemble de données de l'objet suivant à sélectionner dans le menu et - dans le cas où cet objet à sélectionner dans le menu est pour sa part une liste de menu - un pointeur sur l'ensemble de données du premier objet à sélectionner dans le menu de la liste de menu en cours.

5. Procédé de commande séquentielle par menu, dans lequel il est prévu dans au moins une liste de menu d'une structure de menu hiérarchique un objet à sélectionner dans le menu, dont la sélection provoque un saut direct à l'objet suivant ou précédent à sélectionner dans le menu du niveau juste supérieur.

6. Procédé suivant la revendication 5, dans lequel il est constitué dans une mémoire de données une structure de données, dans laquelle il est associé à chaque objet à sélectionner dans le menu d'une liste de menu un ensemble de données qui comporte les données des objets à sélectionner dans le menu, un pointeur sur l'ensemble de données de la liste de menu hiérarchiquement juste supérieure, un pointeur sur l'ensemble de données de l'objet suivant à sélectionner dans le menu et - dans le cas où cet objet à sélectionner dans le menu est pour sa part une liste de menu - un pointeur sur l'ensemble de données du premier objet à sélectionner dans le menu de la liste de menu en cours.
